# EUROPÄISCHE PATENTSCHRIFT

(11) **EP 2 085 845 B1**
(45) Veröffentlichungstag und Bekanntmachung des Hinweises auf die Patenterteilung: **11.12.2013**
(21) Anmeldenummer: 09000627.1
(22) Anmeldetag: 17.01.2009
(51) Int. Cl.: G05B 19/23, B23Q 15/22, G05B 19/19

(54) **Positionsregler und Verfahren zur Positionsregelung eines Werkzeuges**
Position regulator and method for regulating the position of a tool
Régulateur de position et procédé de réglage de position d'un outil

(30) Priorität: 02.02.2008 DE 102008007292
(43) Veröffentlichungstag der Anmeldung: 05.08.2009
(73) Patentinhaber: IBH Automation Gesellschaft für Steuerungstechnik, 70806 Kornwestheim (DE)
(72) Erfinder: Wohnhaas, Wolfgang, 71737 Kirchberg (DE)
(74) Vertreter: Riedel, Peter

(56) Entgegenhaltungen:
- WO-A1-91/18706
- DE-A1- 19 930 777

## Beschreibung

Die Erfindung betrifft einen Positionsregler eines Werkzeuges für die thermische Bearbeitung eines Werkstückes mit den Merkmalen nach dem Oberbegriff des Anspruchs 1 sowie ein Verfahren zur Positionsreglung eines solchen Werkzeuges mit den Merkmalen nach dem Oberbegriff des Anspruchs 7.

Für die Bearbeitung von Werkstücken kommen verbreitet Werkzeugmaschinen zum Einsatz, bei denen ein geeignetes Werkzeug mittels Antrieben in verschiedenen Achsrichtungen verfahrbar ist. Dabei sind im Regelfall mindestens drei bewegliche Achsen vorgesehen, die in einem Maschinenachsensystem beispielsweise in Form eines kartesischen Koordinatensystems oder eines Polarkoordinatensystems angeordnet sind. Es können natürlich auch zusätzliche bewegliche Achsen vorgesehen sein. Das Werkzeug wird dabei mittels einer übergeordneten Steuerung und der zugeordneten Antriebe in die gewünschte, durch die übergeordnete Steuerung vorgegebene Position verfahren.

Aus der WO 91/18706 A1 sind eine Anordnung und ein Verfahren zur Positionierung der Mündung einer CNC-Lasermaschine bekannt, wobei zwei verschiedene Koordinatensysteme mit einer zwischengeschalteten Umwandlungsmatrix dafür sorgen sollen, dass eine einfache Positionsveränderung der Mündung unter Beibehaltung ihres Abstandes zum Werkstück erfolgen kann.

Für viele Anwendungsfälle reicht eine einfache Positionssteuerung des Werkzeuges nicht aus. Zur Verbesserung der Positioniergenauigkeit wird deshalb ein Positionsregler eingesetzt, der einen Lageregelkreis mit einem Lageregler für die Lageregelung des Werkzeuges umfasst. Im geschlossenen Lageregelkreis wird die Sollposition des Werkzeuges mit seiner tatsächlich ermittelten IstPosition verglichen, wobei auftretende Differenzen ausgeregelt werden. Die Positioniergenauigkeit des Werkzeuges kann damit im Vergleich zu einer reinen Steuerung deutlich verbessert werden. Die Verfahrgeschwindigkeit und damit die Wirtschaftlichkeit der Maschine ist jedoch durch die im Lageregelkreis technisch umsetzbaren Verstärkungsfaktoren begrenzt.

Hier setzen Regelungsanordnung und Verfahren nach der DE 199 30 777 A1 an, wonach eine parallele Struktur von Lageregler und Drehzahlregler vorgesehen ist. Durch die zumindest teilweise Parallelschaltung von Lageregelkreis und Drehzahlregelkreis sollen sich die beiden Regler nur minimal beeinflussen. Dadurch sollen die Verstärkungsfaktoren in den Reglern nahezu unabhängig voneinander gewählt werden können.

In bestimmten Anwendungsfällen kommen Werkzeuge für die thermische Bearbeitung eines Werkstückes zum Einsatz, bei denen die Bearbeitung unter Einwirkung von Temperatur erfolgt. Solche Werkzeuge sind insbesondere Laser-, Autogen-, Plasma- oder Funkenerosionswerkzeuge, mittels derer infolge der entstehenden Wärmeeinwirkung Material vom Werkstück abgetragen wird. Am Beispiel eines Laserwerkzeuges wird deutlich, dass es für ein exaktes Bearbeitungsergebnis auf eine präzise Einstellung des Abstandes vom Werkzeug zum Werkstück ankommt, da der Laser exakt auf die Bearbeitungsstelle fokussiert sein muss. Sinngemäß das Gleiche gilt auch für andere Bauformen von thermischen Werkzeugen, wie sie beispielhaft weiter oben genannt sind.

Die bei der thermischen Bearbeitung auf das Werkstück einwirkende Wärme kann jedoch dazu führen, dass sich das Werkstück in einer Weise verformt, die einer exakten Bearbeitung entgegensteht. Insbesondere dünnwandige Bleche können sich durch die auftretenden thermischen Spannungen derart verwerfen, dass trotz präziser Lageregelung des Werkzeuges dessen Abstand zur Werkstückoberfläche nicht mehr in der vorgegebenen Toleranz liegt.

Zur Vermeidung dieses Nachteils sind deshalb Positionsregler und Regelverfahren bekannt, bei denen zusätzlich zum Lageregelkreis auch ein Abstandsregelkreis zum Einsatz kommt. Im Abstandsregelkreis wird der Ist-Abstand des Werkzeuges zum Werkstück ermittelt und mit seinem vorgegebenen Soll-Abstand verglichen. Auftretende Differenzen, die durch die Werkstückverformung hervorgerufen werden, können damit ausgeglichen werden.

Nach dem Stand der Technik ist hierzu vorgesehen, dass der Lageregelkreis dem Abstandsregelkreis unterlagert ist. Der Lageregler des Lageregelkreises verarbeitet sowohl Korrekturgrößen des Lageregelkreises als auch des Abstandsregelkreises. Dies führt dazu, dass der erzielbare Verstärkungsfaktor des Abstandsreglers durch die Verstärkungsfaktoren des Lagereglers begrenzt ist. In bestimmten Bauformen kann der Verstärkungsfaktor des Abstandsreglers nicht mehr als ein Viertel der Verstärkungsfaktoren des Lagereglers betragen. Hierdurch wird die Bearbeitungsgeschwindigkeit und damit die Wirtschaftlichkeit der Werkzeugmaschine insgesamt deutlich eingeschränkt.

Der Erfindung liegt die Aufgabe zugrunde, einen gattungsgemäßen Positionsregler derart weiterzubilden, dass bei hoher Bearbeitungsgenauigkeit eine verbesserte Wirtschaftlichkeit erzielt ist.

Diese Aufgabe wird durch einen Positionsregler mit den Merkmalen des Anspruchs 1 gelöst.

Der Erfindung liegt des weiteren die Aufgabe zugrunde, ein gattungsgemäßes Verfahren zur Positionsregelung derart weiterzubilden, dass die erzielbare Bearbeitungsgeschwindigkeit der damit betriebenen Werkzeugmaschine ohne Einbußen bei der Regelgenauigkeit erhöht wird.

Diese Aufgabe wird durch ein Verfahren mit den Merkmalen des Anspruchs 7 gelöst.

Es wird ein Positionsregler vorgeschlagen, bei dem der Lageregelkreis und der Abstandsregelkreis derart voneinander entkoppelt sind, dass der Abstandsregelkreis für die Abstandsregelung des Werkzeuges allein in Richtung der Abstandskoordinate vorgesehen ist, und dass der Lageregelkreis für die Positionsregelung des Werkzeuges in den übrigen Koordinaten des Abstandskoordinatensystems unter Eliminierung der Abstandskoordinate vorgesehen ist. Im entsprechenden erfindungsgemäßen Verfahren zur Positionsregelung wird im Abstandsregelkreis die Abstandsregelung des Werkzeuges allein in Richtung der Abstandskoordinate vorgenommen, während im Lageregelkreis die Positionsreglung des Werkzeuges in den übrigen Koordinaten des Abstandskoordinatensystems unter Eliminierung der Abstandskoordinate durchgeführt wird. Hierdurch wird erreicht, dass sich die Abstandsregelung und die Lageregelung in den übrigen Koordinaten gegenseitig nicht beeinflussen. Der Verstärkungsfaktor des Abstandsreglers kann demnach unabhängig von der Auslegung des Lagereglers eingestellt werden und ist durch diesen nicht mehr begrenzt. Zweckmäßig ist dabei der Verstärkungsfaktor des Abstandsreglers zumindest näherungsweise genau so groß wie die Verstärkungsfaktoren des Lagereglers. Unter gleichzeitiger Aufrechterhaltung einer präzisen Abstands- und Lageregelung kann die Bearbeitungsgeschwindigkeit der Werkzeugmaschine und damit deren Wirtschaftlichkeit deutlich gesteigert werden.

In einer vorteilhaften Ausführungsform des Verfahrens erfolgt die Positionsregelung im Abstandskoordinatensystem, wobei der Lageregler des Lageregelkreises Korrekturwerte im Abstandskoordinatensystem unter Eliminierung eines Korrekturwertes in Richtung der Abstandskoordinate erzeugt, wobei der Abstandsregler des Abstandsregelkreises einen Korrekturwert in Richtung der Abstandskoordinate erzeugt, und wobei die Korrekturwerte beider Regler mittels einer Umkehrtransformation vom Abstandskoordinatensystem in das Maschinenkoordinatensystem den Antrieben zugeführt werden.

Alternativ kann es zweckmäßig sein, dass eine Positionsregelung im Maschinenkoordinatensystem erfolgt, wobei aus einem Lage-Sollwert-Vektor und einem Lage-Istwert-Vektor ein Differenzvektor gebildet wird, wobei im Differenzvektor die Regelung der Abstandskoordinate eliminiert wird, wobei ein Abstandsregler des Lageregelkreises einen Korrekturwert in Richtung der Abstandskoordinate erzeugt, und wobei dieser Korrekturwert mittels der vorgenannten Umkehrtransformation den Antrieben zugeführt wird.

Insbesondere in der letztgenannten Ausführung des Verfahrens weisen die vom Positionsregler beaufschlagten Antriebe vorteilhaft zumindest näherungsweise ein identisches Übertragungsverhalten auf. Dies ermöglicht es in vorteilhafter Weiterbildung, auf eine Transformation beziehungsweise Umkehrtransformation zwischen den beiden verschiedenen Koordinatensystemen zu verzichten. Den Lageregler und/oder den Antrieben ist dabei keine Transformation vom Maschinenkoordinatensystem in das Abstandskoordinatensystem und auch keine Umkehrtransformation vor- bzw. nachgeschaltet. Hierdurch kann der Aufbau des Reglers in kostensparender Weise vereinfacht werden.

Bevorzugt ist ein separater Messaufnehmer, insbesondere ein kapazitiver Messaufnehmer vorgesehen, mittels dessen der Ist-Abstand des Werkzeuges zum Werkstück ermittelt wird. Dies erleichtert die praktische Umsetzung einer präzisen Abstandsregelung.

Die Abstandsregelung erfolgt für die meisten Anwendungsfälle bevorzugt senkrecht zur Oberfläche des Werkstückes, wodurch eine präzise Schnittführung bzw. ein präziser Materialabtrag beispielsweise in Dickenrichtung des Bleches oder anderer Werkstückformen möglich ist. Für bestimmte Anwendungsfälle, beispielsweise für Schrägschnitte oder dergleichen, kann es aber auch zweckmäßig sein, dass die Abstandskoordinate gegenüber der Oberfläche des Werkstückes geneigt ist, also nicht senkrecht darauf steht.

Bevorzugt ist eine übergeordnete Steuerung vorgesehen, mittels derer die Sollwerte für die Positionierung des Werkzeuges erzeugt werden. Hierfür können verschiedene Formen der Steuerung in Betracht kommen. Im Sinne der vorliegenden Erfindung hat sich eine CNC-Steuerung als zweckmäßig herausgestellt.

Der erfindungsgemäße Positionsregler und das erfindungsgemäße Regelungsverfahren können vorteilhaft mit verschiedenen Werkzeugen für verschiedene Bearbeitungsaufgaben eingesetzt werden. Ihre Vorteile der hohen Regelgenauigkeit bei gleichzeitig hoher Bearbeitungsgeschwindigkeit werden insbesondere bei Ausführungen des Werkzeugs als Laser-, Autogen-, Plasma- oder Funkenerosionswerkzeuge deutlich.

Ausführungsbeispiele der Erfindung sind im Folgenden anhand der Zeichnung näher beschrieben. Es zeigen:
- Fig. 1: in perspektivischer Schemadarstellung ein mittels mehrerer Antriebe in verschiedenen Achsen eines Maschinenkoordinatensystems verfahrbares Werkzeug, welches gegenüber einem schrägstehenden Werkstück in einer ebenfalls schrägstehenden Abstandsrichtung geregelt ist;
- Fig. 2: ein Blockschaltbild eines Positionsreglers nach dem Stand der Technik mit einem Abstandsregelkreis und einem unterlagerten Lageregelkreis;
- Fig. 3: ein Blockschaltbild eines ersten erfindungsgemäß ausgeführten Positionsreglers mit voneinander ge- trennter Lage- und Abstandsregelung, bei dem die Positionsregelung im Abstandskoordinatensystem erfolgt;
- Fig. 4: eine alternative Ausführung zur Anordnung nach Fig. 3, bei der die Positionsregelung im Maschinenkoordi- natensystem erfolgt;
- Fig. 5: eine vereinfachte Ausführung des Positionsreglers nach Fig. 4 unter Verzicht auf Transformationen zwi- schen den verschiedenen Koordinatensystemen bei An- trieben mit identischem Übertragungsverhalten.

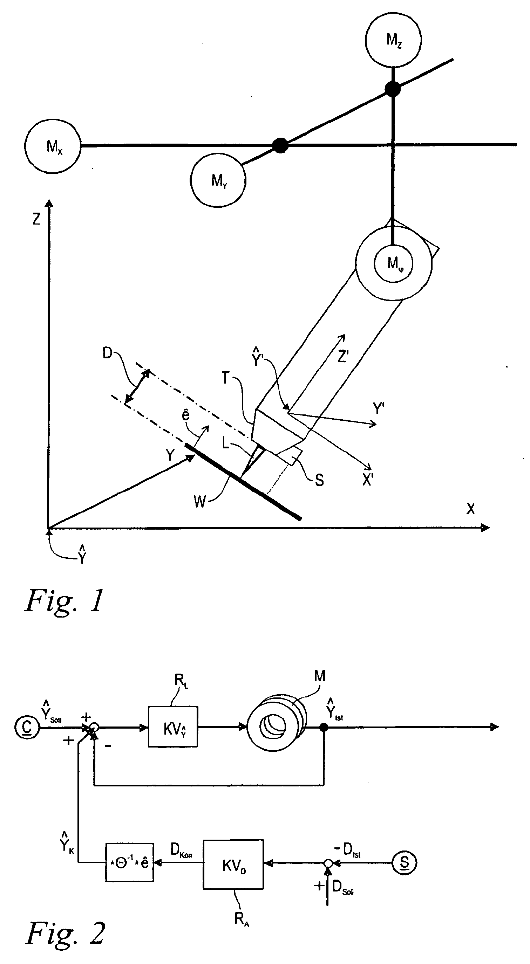

Fig. 1 zeigt in perspektivischer Schemadarstellung Komponenten einer Werkzeugmaschine zur Bearbeitung eines Werkstückes W. Hierzu ist ein Werkzeug T der Werkzeugmaschine mittels Antrieben Mₓ, M_{y}, M_{z} entlang von Koordinaten X, Y, Z eines Maschinenkoordinatensystems Y verfahrbar. Außerdem ist das Werkzeug T mittels eines Antriebes M_{ϕ} schwenkbar. Darüber hinaus können noch weitere Antriebe für Bewegungsfreiheitsgrade in weiteren Achsrichtungen vorgesehen sein. Das Maschinenkoordinatensystem Y ist im gezeigten Ausführungsbeispiel ein kartesisches Koordinatensystem. Es können aber auch Polarkoordinatensysteme oder dergleichen zweckmäßig sein.

Das Werkstück W ist nach Fig. 1 ein Blechbauteil, von dem hier der besseren Übersichtlichkeit halber nur ein Abschnitt mit Erstreckung in den Koordinaten X, Z dargestellt ist. Der hier gezeigte Abschnitt des Werkstückes W ist gegenüber dem Maschinenkoordinatensystem Ŷ gedreht angeordnet. Das Werkstück W kann in der Praxis eine beliebige räumliche Geometrie aufweisen und dabei in beliebiger Ausrichtung relativ zum Maschinenkoordinatensystem Ŷ eingespannt sein.

Das Werkzeug T kann ein Autogen-, ein Plasma-, ein Funkenerosionswerkzeug oder ein anderes geeignetes Werkzeug für die thermische Bearbeitung des Werkstückes W sein. Im gezeigten Ausführungsbeispiel ist das Werkzeug T hierzu als Laserwerkzeug ausgeführt und erzeugt einen Laserstrahl L, der auf die Bearbeitungsstelle am Werkstück W fokussiert ist. Hierzu weist das Werkzeug T einen Abstand D zum Werkstück W auf, der während des Betriebes dauerhaft oder in Intervallen mittels eines Messaufnehmers S gemessen wird. Der Abstand D gibt eine Abstandskoordinate Z' eines Abstandskoordinatensystems Ŷ' vor, wobei die übrigen Koordinaten X', Y' senkrecht zueinander und zur Abstandskoordinate Z' liegen. Nach Fig. 1 steht die Abstandskoordinate Z' senkrecht auf der Oberfläche des Werkstückes W im aktuellen Bearbeitungspunkt, so dass auch der Abstand D senkrecht zur Oberfläche des Werkstückes W mittels des Messaufnehmers S gemessen und eingestellt wird. Dabei liegen die übrigen Koordinaten X', Y' des Abstandskoordinatensystems Ŷ' parallel zur Oberfläche des Werkstückes W an dessen aktueller Bearbeitungsstelle. Beispielsweise für einen Schrägschnitt oder dergleichen kann es aber auch zweckmäßig sein, das Abstandskoordinatensystem Y' derart zur Oberflächennormalen des Werkstückes W zu drehen, dass die Abstandskoordinate Z' und damit die Richtung des Abstandes D nicht senkrecht zur Oberfläche des Werkstückes W stehen.

Für die nachfolgend näher beschriebene Positionsregelung des Werkzeuges T wird ein Einheitsvektor ê gebildet, der in Richtung der Abstandskoordinate Z' und damit in Richtung des Abstandes D weist. Die Regelung und Messung des Abstandes D erfolgen demnach unter Zuhilfenahme des Einheitsvektors ê in Richtung der Abstandskoordinate Z'.

Fig. 2 zeigt in schematischer Blockdarstellung einen Positionsregler für das Werkzeug T (Fig. 1) nach dem Stand der Technik. Der Positionsregler umfasst einen Lageregelkreis mit einem Lageregler R_{L} und einen Abstandsregelkreis mit einem Abstandsregler R_{A}. Der Lageregelkreis ist dem Abstandsregelkreis unterlagert, wobei der Lageregler R_{L} einen Verstärkungsfaktor KV_{Ŷ} aufweist, während der Abstandsregler R_{A} einen Verstärkungsfaktor KV_{D} aufweist. Die Positionsregelung erfolgt hier im Maschinenkoordinatensystem Y, demnach eine vorgeschaltete, übergeordnete Steuerung C einen Lage-Sollwert-Vektor Ŷₛₒₗₗ des Maschinenkoordinatensystems Y in den Positionsregler einspeist. Dieser wird mittels des Lagereglers R_{L} den Antrieben M aufgeschaltet, die den Antrieben Mₓ, M_{y}, M_{z} nach Fig. 1 entsprechen. Über ein nicht dargestelltes Messsystem wird im Maschinenkoordinatensystem Y ein Lage-Istwert-Vektor Ŷ_{Ist} bestimmt und unter Bildung des geschlossenen Lageregelkreises eingangsseitig des Lagereglers R_{L} derart aufgeschaltet, dass eine Differenz zwischen dem Lage-Sollwert-Vektor Ŷ_{Soll} und dem Lage-Istwert-Vektor ŶIst gebildet wird.

Des weiteren ist noch ein vereinfacht dargestellter, geschlossener Abstandsregelkreis mit dem Abstandsregler R_{A} und mit einem Messaufnehmer S gebildet. Mittels des Messaufnehmers S wird der skalare Ist-Abstand D_{Ist} des Werkzeuges T zum Werkstück W ermittelt. Hierzu wird eine Differenz zum skalaren Soll-Abstand D_{Soll} gebildet, wobei der skalare Soll-Abstand D_{Soll} durch die Steuerung C vorgegeben ist. Der skalare Ist-Abstand D_{Ist}, der skalare Sollabstand D_{Soll} und die daraus gebildete skalare Differenz ist im Abstandskoordinatensystem Y' gebildet, und zwar in Richtung des Einheitsvektors ê bzw. in Richtung der Abstandskoordinate Z'. Die vorgenannte Differenz wird in den Abstandsregler R_{A} eingespeist. Dieser erzeugt mittels seines Verstärkungsfaktors KV_{D} und zusätzlicher, nicht dargestellter Umwandlungen einen skalaren Korrekturwert D_{Korr}, der nachfolgend mittels des Einheitsvektors ê und einer Umkehrtransformation θ⁻¹ in einen Lagekorrekturvektor Ŷ_{K} des Maschinenkoordinatensystems Y umgeformt wird. Die Umkehrtransformation θ⁻¹ dreht die Eingangsdaten vom Abstandskoordinatensystem Y' in das Maschinenkoordinatensystem Y. Unter Bildung eines geschlossenen Abstandsregelkreises wird dieser Lagekorrekturvektor Ŷ_{K} an gleicher Stelle eingangsseitig des Lagereglers R_{L} eingespeist wie der Lage-Istwert-Vektor Ŷ_{Tst} des Lageregelkreises.

Bei der gegebenen Anordnung ist die Reaktionszeit des Abstandsregelkreises durch den unterlagerten Lageregelkreis begrenzt. Dies wird am vorliegenden Beispiel deutlich, bei dem der Lageregler R_{L} und der Abstandsregler R_{A} beide jeweils als Proportionalregler ausgebildet sind. Hierbei tritt der asymptotische Grenzfall für die Übertragungsfunktion des skalaren Soll-Abstandes D_{Soll} zum skalaren Ist-Abstand D₁ₛₜ bei einem Verstärkungsfaktor KV_{D} des Abstandsregelkreises ein, der nur 0,25 * dem Verstärkungsfaktor KV_{Ŷ} des Lagereglers R_{L} beträgt. Hierdurch ist die Arbeitsgeschwindigkeit und damit die Wirtschaftlichkeit der mit einem Positionsregler nach Fig. 2 betriebenen Werkzeugmaschine nach Fig. 1 eingeschränkt.

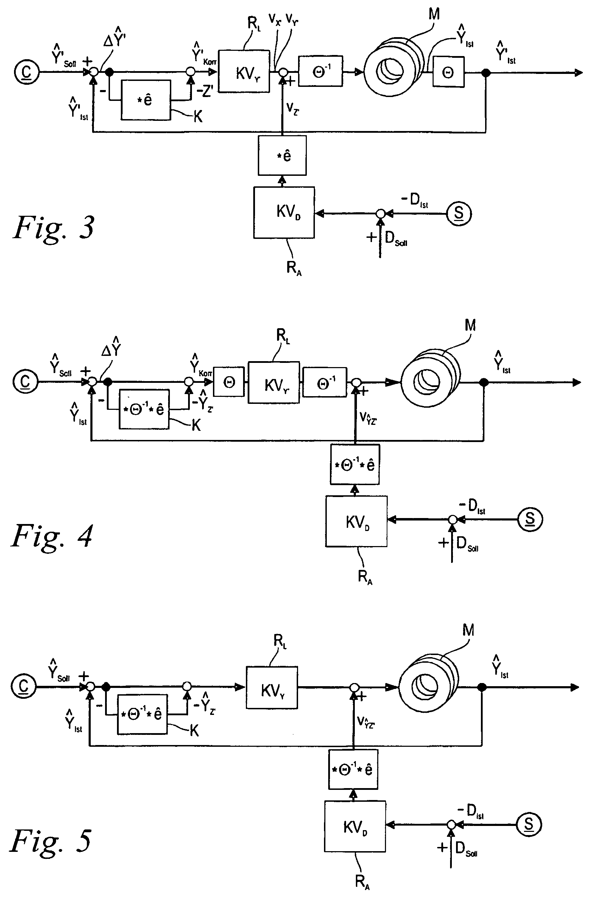

Die Fig. 3 bis 5 zeigen verschiedene erfindungsgemäße Ausführungsbeispiele von Positionsreglem für das Werkzeug T einer Werkzeugmaschine nach Fig. 1. Ebenso wie beim Stand der Technik nach Fig. 2 umfassen die erfindungsgemäßen Positionsregler nach den Fig. 3 bis 5 je einen Lageregelkreis mit einem Lageregler R_{L} und einen Abstandsregelkreis mit einem Abstandsregler R_{A}. Bei ihrer nachfolgenden Beschreibung wird jeweils gleichzeitig auch auf Fig. 1 Bezug genommen.

Das Ausführungsbeispiel nach Fig. 3 zeigt die prinzipielle Funktionsweise der Erfindung, wobei hier die Positionsregelung im Abstandskoordinatensystem Y' erfolgt. Die übergeordnete, vorgeschaltete Steuerung C erzeugt hier einen Lage-Sollwert-Vektor Ŷ'_{Soll} im gedrehten Abstandskoordinatensystem Ŷ'. Die übergeordnete Steuerung C ist eine CNC-Steuerung. Es können aber auch andere Steuerungsformen zweckmäßig sein. Die hier schematisch dargestellten Antriebe M entsprechen den Antrieben M_{X}, M_{Y}, M_{Z} nach Fig. 1, wobei auch der Antrieb M_{ϕ} und weitere, nicht dargestellte Antriebe für zusätzliche Bewegungsfreiheitsgrade des Werkzeuges T mit umfasst sein können. Die Antriebe M arbeiten entsprechend der Darstellung nach Fig. 1 im Maschinenkoordinatensystem Y. Über ein nicht dargestelltes Messsystem wird der mittels der Antriebe M erzeugte Lage-Istwert-Vektor Ŷ_{Ist} im Maschinenkoordinatensystem Y des Werkzeuges T ermittelt. Anschließend ist eine Transformation θ vom Maschinen-Koordinatensystem Y in das Abstandskoordinatensystem Y' vorgesehen, wodurch ein Lage-Istwert-Vektor Ŷ'_{Ist} im Abstandskoordinatensystem Ŷ' gebildet wird. Unter Bildung des geschlossenen Lageregelkreises wird dieser Lage-Istwert-Vektor Ŷ'_{Ist} eingangsseitig des Lagereglers R_{L} derart eingespeist, dass aus der Differenz des Lage-Sollwert-Vektors Ŷ'_{Soll} und des Lage-Istwert-Vektors Ŷ'_{Ist} ein Differenzvektor ΔŶ' im Abstandskoordinatensystem Ŷ' gebildet wird. Dieser Differenzvektor ΔŶ' wird jedoch nicht direkt dem Lageregler R_{L} zugeführt. Vielmehr ist ein Korrekturglied K parallel geschaltet, in dem mittels des Einheitsvektors ê die Abstandskoordinate Z' subtrahiert, also eliminiert wird. Es entsteht ein Korrekturvektor Ŷ'_{Korr}, der lediglich Komponenten in Richtung der Koordinaten X', Y', nicht jedoch in Richtung der Abstandskoordinate Z' enthält. Der Korrekturvektor Ŷ'_{Korr} des Abstandskoordinatensystems Ŷ' wird in den Lageregler R_{L} eingespeist und mittels Verstärkungsfaktoren KV_{Y}, derart weiterverarbeitet, dass Korrekturwerte v_{X'}, v_{Y'} als Geschwindigkeits-Korrekturgrößen in Richtung der Koordinaten X', Y', nicht jedoch ein Korrekturwert v_{Z'} in Richtung der Abstandskoordinate Z' entstehen. Im Lageregelkreis erfolgt deshalb die Positionsregelung des Werkzeuges T lediglich in den Koordinaten X', Y' des Abstandskoordinatensystems Ŷ' unter Eliminierung der Abstandskoordinate Z'.

Der Abstandsregelkreis mit dem Abstandsregler R_{A} entspricht in seinem Aufbau weitgehend demjenigen nach Fig. 2. Der vereinfacht dargestellte geschlossene Abstandsregelkreis umfasst den auch in Fig. 1 dargestellten Messaufnehmer S, mittels dessen der skalare Ist-Abstand D_{Ist} des Werkzeuges T zum Werkstück W ermittelt wird. Der Messaufnehmer S ist im gezeigten Ausführungsbeispiel ein kapazitives Messsystem zur Bestimmung des Abstandes D im Abstandskoordinatensystem Y'. Es können jedoch auch andere geeignete Messaufnehmer S eingesetzt werden.

Der Abstandsreglers R_{A} erzeugt abweichend von Fig. 2 als Ausgangswert nicht den skalaren Korrekturwert D_{Korr}, sondern eine Geschwindigkeits-Korrekturgröße. Dieser Ausgangswert des Abstandsreglers R_{A} wird mit dem Einheitsvektor ê weiterverarbeitet, so dass ein Korrekturwert v_{Z'} als Geschwindigkeits-Korrekturgröße in Richtung der Abstandskoordinate Z' des Abstandskoordinatensystems Y' entsteht. Der Korrekturwert v_{Z'} wird ausgangsseitig des Lagereglers R_{L} eingeschleift und zusammen mit den Korrekturwerten v_{X'}, v_{Y'} des Lageregelkreises mittels der Umkehrtransformation θ⁻¹ in das Maschinenkoordinatensystem Y gedreht und den Antrieben M zugeführt.

Aus den vorgenannten Ausführungen ergibt sich, dass der Lageregelkreis und der Abstandsregelkreis derart voneinander entkoppelt sind, dass der Abstandsregelkreis für die Abstandsregelung des Werkzeuges T allein in Richtung der Abstandskoordinaten Z' vorgesehen ist, während der Lageregelkreis für die Positionsregelung des Werkzeuges T in den übrigen Koordinaten X', Y' des Abstandskoordinatensystems Y' unter Eliminierung der Abstandskoordinate Z' vorgesehen ist. Mit anderen Worten wird im Abstandsregelkreis die Abstandsregelung des Werkzeuges T allein in Richtung der Abstandskoordinate Z' vorgenommen, während im Lageregelkreis die Positionsregelung des Werkzeuges T in den übrigen Koordinaten X', Y' des Abstandskoordinatensystems Y' unter Eliminierung der Abstandskoordinate Z' durchgeführt wird.

Die hierdurch herbeigeführte Entkoppelung des Lageregelkreises und des Abstandsregelkreises erlaubt es, den Verstärkungsfaktor KV_{D} des Abstandreglers R_{A} unabhängig von und ohne Begrenzung durch die Verstärkungsfaktoren KV_{Y'} des Lagereglers R_{L} einzustellen. Gegenüber dem Stand der Technik nach Fig. 2 kann der Verstärkungsfaktor KV_{D} des Abstandsreglers R_{A} angehoben werden, wobei er vorliegend zumindest näherungsweise genau so groß ist wie die Verstärkungsfaktoren KV_{Y'} des Lagereglers R_{L} nach den Fig. 3 oder 4 oder die weiter unten genannten Verstärkungsfaktoren KV_{Y} des Lagereglers R_{L} nach Fig. 5.

Fig. 4 zeigt eine in der Praxis bevorzugte Variante der Anordnung nach Fig. 3, bei der die Positionsregelung des Werkzeuges T im Maschinenkoordinatensystem Ŷ erfolgt. Der von der vorgeschalteten Steuerung C erzeugte Lage-Sollwert-Vektor Ŷ_{Soll} und der ausgangsseitig der Antriebe M ermittelte Lage-Istwert-Vektor Ŷ_{Ist} sind ebenso wie der daraus gebildete Differenzvektor ΔŶ im Maschinenkoordinatensystem Ŷ gebildet. Dementsprechend wird im anschließend parallel geschalteten Korrekturglied K die Regelung der Abstandskoordinate Z' nicht nur durch den Einheitsvektor ê, sondern auch durch die Umkehrtransformation θ⁻¹ eliminiert, um einen Korrekturvektor Ŷ_{Korr} des Maschinenkoordinatensystems Y zu bilden. Dieser wird einer Transformation θ vom Maschinenkoordinatensystem Y in das Abstandskoordinatensystem Ŷ' unterzogen und dem Lageregler R_{L} zugeführt. Der Lageregler R_{L} arbeitet mit seinen Verstärkungsfaktoren KV_{Ŷ}, im Abstandskoordinatensystem Y', wobei er lediglich eine Regelung des Werkzeuges T in Richtung der Koordinaten X', Y', nicht jedoch in Richtung der Abstandskoordinate Z' durchführt.

Um die Ausgangswerte des Lagereglers R_{L} den im Maschinenkoordinatensystem Y arbeitenden Antrieben M zuführen zu können, werden diese ausgangsseitig des Lagereglers R_{L} einer Umkehrtransformation θ⁻¹ unterzogen. Hierin fehlt noch ein Korrekturwert v_{ŶZ}, für die Abstandsregelung, der jedoch wie nachfolgend beschrieben durch den Abstandsregelkreis erzeugt und ausgangseitig des Lagereglers R_{L} und seiner Umkehrtransformation θ⁻¹ eingespeist und den Antrieben M zugeführt wird.

Im vereinfacht dargestellten Abstandsregelkreis wird der Ausgabewert des Abstandsreglers R_{A} mittels des Einheitsvektors ê und der Umkehrtransformation θ⁻¹ aus dem Abstandskoordinatensystem Ŷ' in das Maschinenkoordinatensystem Y gedreht. Es entsteht der vektorielle Korrekturwert v_{ŶZ'} als Geschwindigkeits-Korrekturgröße, der auf die Antriebe M allein in Richtung der Abstandskoordinate Z' einwirkt.

Auch hier gilt im Ergebnis das Gleiche wie im Ausführungsbeispiel nach Fig. 3: Es entsteht eine Entkoppelung des Lageregelkreises vom Abstandsregelkreis, in dessen Folge der Verstärkungsfaktor KV_{D} des Abstandsreglers R_{A} nicht mehr durch die Verstärkungsfaktoren KVŶ beschränkt ist und deshalb auf zumindest näherungsweise gleiche Größe angehoben werden kann.

Fig. 5 zeigt eine Variante der Anordnung nach Fig. 4, die dieser gegenüber vereinfacht ist. Hierzu weisen die vom Positionsregler beaufschlagten Antriebe M, die in der Anordnung nach Fig. 1 den Antrieben M_{X}, M_{Y}, M_{Z} entsprechen, zumindest näherungsweise ein regelungstechnisch identisches Übertragungsverhalten auf. In dessen Folge kann beim Lageregler R_{L} und bei den Antrieben M auf Transformationen θ und Umkehrtransformationen θ⁻¹ verzichtet werden. Abweichend von der Ausführung nach Fig. 4 ist dem Lageregler R_{L} keine Transformation θ vorgeschaltet und auch keine Umkehrtransformation θ⁻¹ nachgeschaltet. Sinngemäß das Gleiche gilt auch für die Antriebe M: Abweichend vom Ausführungsbeispiel nach Fig. 3 ist in der Ausführung nach Fig. 5 den Antrieben M keine Umkehrtransformation θ⁻¹ vorgeschaltet und keine Transformation θ nachgeschaltet. In den übrigen Merkmalen und Bezugszeichen stimmt das Ausführungsbeispiel nach Fig. 5 mit demjenigen nach Fig. 4 überein. Sofern nicht abweichend beschrieben, stimmen auch die Ausführungsbeispiele nach den Fig. 4 und 5 mit demjenigen nach Fig. 3 überein.

## Patentansprüche

1. Positionsregler eines Werkzeuges (T) für die thermische Bearbeitung eines Werkstückes (W), wobei das Werkzeug (T) mittels Antrieben (Mx, M_{Y}, M_{Z}) in einem Maschinenkoordinatensystem (Y) verfahrbar ist, umfassend einen Lageregelkreis mit einem Lageregler (R_{L}) für die Lageregelung des Werkzeuges (T) und einen Abstandsregelkreis mit einem Abstandsregler (R_{A}) zur Regelung eines Abstandes (D) des Werkzeuges (T) zum Werkstück (W), wobei durch den Abstand (D) eine Abstandskoordinate (Z') eines Abstandskoordinatensystems (Ŷ') vorgegeben ist,
**dadurch gekennzeichnet, dass** der Lageregelkreis und der Abstandsregelkreis derart voneinander entkoppelt sind, dass der Abstandsregelkreis für die Abstandsregelung des Werkzeuges (T) allein in Richtung der Abstandskoordinate (Z') vorgesehen ist, und dass der Lageregelkreis für die Positionsregelung des Werkzeuges (T) in den übrigen Koordinaten (X', Y') des Abstandskoordinatensystems (Y') unter Eliminierung der Abstandskoordinate (Z') vorgesehen ist.

2. Positionsregler nach Anspruch 1,
**dadurch gekennzeichnet, dass** ein Verstärkungsfaktor (KV_{D}) des Abstandsreglers (R_{A}) zumindest näherungsweise genauso groß ist wie ein Verstärkungsfaktor (KV_{Ŷ}, KV_{Ŷ}) des Lagereglers (R_{L}).

3. Positionsregler nach Anspruch 1 oder 2,
**dadurch gekennzeichnet, dass** die vom Positionsregler beaufschlagten Antriebe (M_{X}, M_{Y}, M_{Z}) zumindest näherungsweise ein identisches Übertragungsverhalten aufweisen.

4. Positionsregler nach Anspruch 3,
**dadurch gekennzeichnet, dass** dem Lageregler (R_{L}) und/oder den Antrieben (M_{X}, M_{Y}, M_{Z}) keine Transformation (Θ) vom Maschinenkoordinatensystem (Ŷ) in das Abstandskoordinatensystem (Ŷ') und keine Umkehrtransformation (Θ⁻¹) vor- bzw. nachgeschaltet ist.

5. Positionsregler nach einem der Ansprüche 1 bis 4,
**dadurch gekennzeichnet, dass** eine übergeordnete Steuerung (C) insbesondere in Form einer CNC-Steuerung vorgesehen ist.

6. Positionsregler nach einem der Ansprüche 1 bis 5,
**dadurch gekennzeichnet, dass** das Werkzeug (T) ein Laser-, ein Autogen-, ein Plasma-oder ein Funkenerosionswerkzeug ist.

7. Verfahren zur Positionsregelung eines Werkzeuges (T) für die thermische Bearbeitung eines Werkstückes (W), wobei das Werkzeug (T) mittels Antrieben (M_{X}, M_{Y}, M_{Z}) in einem Maschinenkoordinatensystem (Y) verfahren wird, wobei eine Lageregelung des Werkzeuges (T) mittels eines Lageregelkreises vorgenommen wird, wobei zusätzlich eine Abstandsregelung eines Abstandes (D) des Werkzeuges (T) zum Werkstück (W) mittels eines Abstandsregelkreises durchgeführt wird, und wobei durch den Abstand (D) eine Abstandskoordinate (Z') eines Abstandskoordinatensystems (Ŷ') vorgegeben ist, **dadurch gekennzeichnet, dass** im Abstandsregelkreis die Abstandsregelung des Werkzeuges (T) allein in Richtung der Abstandskoordinate (Z') vorgenommen wird, und dass in dem vom Abstandsregelkreis entkoppelten Lageregelkreis die Positionsregelung des Werkzeuges (T) in den übrigen Koordinaten (X', Y') des Abstandskoordinatensystems (Y') unter Eliminierung der Abstandskoordinate (Z') durchgeführt wird.

8. Verfahren nach Anspruch 7,
**dadurch gekennzeichnet, dass** die Positionsregelung im Abstandskoordinatensystem (Ŷ') erfolgt, wobei ein Lageregler (R_{L}) des Lageregelkreises Korrekturwerte (v_{X'}, v_{Y'}) im Abstandskoordinatensystem (Y') unter Eliminierung eines Korrekturwertes (v_{Z'}) in Richtung der Abstandskoordinate (Z') erzeugt, wobei ein Abstandsregler (R_{A}) des Abstandsregelkreises einen Korrekturwert (v_{Z'}) in Richtung der Abstandskoordinate (Z') erzeugt, und wobei die Korrekturwerte (v_{X'}, v_{Y'}, v_{Z'}) mittels einer Umkehrtransformation (Θ⁻¹) vom Abstandskoordinatensystem (Y') in das Maschinenkoordinatensystem (Y) den Antrieben (M_{X}, M_{Y}, M_{Z}) zugeführt werden.

9. Verfahren nach Anspruch 7,
**dadurch gekennzeichnet, dass** eine Positionsregelung im Maschinenkoordinatensystem (Ŷ) erfolgt, wobei aus einem Lagesollwertvektor (Ŷ_{Soll}) und einem Lageistwertvektor (Ŷ₁ₛₜ) ein Differenzvektor (ΔŶ) gebildet wird, wobei im Differenzvektor (ΔŶ) die Regelung der Abstandskoordinate (Z') eliminiert wird, wobei ein Abstandsregler (L_{A}) des Lageregelkreises einen Korrekturwert (v_{ŶZ'}) in Richtung der Abstandskoordinate (Z') erzeugt, und wobei der Korrekturwert (v_{ŶZ'}) mittels einer Umkehrtransformation (Θ⁻¹) vom Abstandskoordinatensystem (Ŷ') in das Maschinenkoordinatensystem (Y) den Antrieben (M_{X}, M_{Y}, M_{Z}) zugeführt wird.

10. Verfahren nach einem der Ansprüche 7 bis 9,
**dadurch gekennzeichnet, dass** ein Istabstand (D₁ₛₜ) des Werkzeuges (T) zum Werkstück (W) mittels eines Messaufnehmers (S) ermittelt wird.

11. Verfahren nach Anspruch 10,
**dadurch gekennzeichnet, dass** der Istabstand (D₁ₛₜ) mittels eines kapazitiven Messaufnehmers (S) ermittelt wird.

12. Verfahren nach einem der Ansprüche 7 bis 11,
**dadurch gekennzeichnet, dass** die Abstandsregelung senkrecht zur Oberfläche des Werkstückes (W) erfolgt.

13. Verfahren nach einem der Ansprüche 7 bis 12,
**dadurch gekennzeichnet, dass** das Verfahren zur Positionsregelung mit einem Positionsregler nach einem der Ansprüche 1 bis 6 vorgesehen ist.

## Claims

1. Position regulator of a tool (T) for thermal processing of a workpiece (W), wherein the tool (T) can be moved by means of drives (M_{X}, M_{Y}, M_{Z}) in a machine coordinate system (Y), comprising a position regulating circuit with a position regulator (R_{L}) for regulating the position of the tool (T) and a distance regulating circuit with a distance regulator (R_{A}) for regulating a distance (D) of the tool (T) from the workpiece (W), wherein a distance coordinate (Z') of a distance coordinate system (Y') is predefined by the distance (D),
**characterised in that** the position regulating circuit and the distance regulating circuit are decoupled from each other in such a way that the distance regulating circuit is provided for the distance regulation of the tool (T) solely in the direction of the distance coordinate (Z') and the position regulating circuit is provided for the position regulation of the tool (T) in the remaining coordinates (X', Y') of the distance coordinate system (Y') with the elimination of the distance coordinate (Z').

2. Position regulator according to claim 1,
**characterised in that** an amplification factor (KV_{D}) of the distance regulator (R_{A}) is at least approximately as great as an amplification factor (KV_{Ŷ}, KV_{Ŷ}) of the position regulator (R_{L}).

3. Position regulator according to claim 1 or 2,
**characterised in that** the drives (M_{X}, M_{Y}, M_{Z}) impacted by the position regulator exhibit at least approximately identical transmission behaviour.

4. Position regulator according to claim 3,
**characterised in that** no transformation (□) of the machine coordinate system (Y) into the distance coordinate system (Y') and no reverse transformation (□⁻¹) are provided upstream or downstream of the position regulator (R_{L}) and / or the drives (M_{X}, M_{Y}, M_{Z}).

5. Position regulator according to one of the claims 1 to 4,
**characterised in that** a super-ordinate control (C) is provided, in particular in the form of a CNC controller.

6. Position regulator according to one of the claims 1 to 5,
**characterised in that** the tool (T) is a laser, autogenous, plasma or spark erosion tool.

7. Method for position regulation of a tool (T) for the thermal processing of a workpiece (W), wherein the tool (T) is moved by means of drives (M_{X}, M_{Y}, M_{Z}) in a machine coordinate system (Y), wherein a position regulation of the tool (T) is carried out by means of a position regulating circuit, wherein additionally a distance regulation of a distance (D) of the tool (T) from the workpiece (W) is carried out by means of a distance regulating circuit, and wherein using the distance (D) a distance coordinate (Z') of a distance coordinate system (Y') is predefined, **characterised in that** in the distance regulating circuit the distance regulation of the tool (T) is carried out solely in the direction of the distance coordinate (Z'), and in the position regulating circuit which is decoupled from the distance regulating circuit the position regulation of the tool (T) is carried out in the remaining coordinates (X', Y') of the distance coordinate system (Y') with the elimination of the distance coordinate (Z').

8. Method according to claim 7,
**characterised in that** the position regulation is carried out in the distance coordinate system (Y'), wherein a position regulator (R_{L}) of the position regulating circuit produces correction values (V_{X'}, V_{Y'}) in the distance coordinate system (Y') with the elimination of a correction value (V_{Z'}) in the direction of the distance coordinate (Z'), wherein a distance regulator (R_{A}) of the distance regulating circuit produces a correction value (V_{Z'}) in the direction of the distance coordinate (Z'), and wherein the correction values (V_{X'}, V_{Y'}, V_{Z'}) are fed to the drives (M_{X}, M_{Y}, M_{Z}) by means of a reverse transformation (□⁻¹) of the distance coordinate system (Ŷ') into the machine coordinate system (Ŷ).

9. Method according to claim 7,
**characterised in that** a position regulation is carried out in the machine coordinate system (Y), wherein a differential vector (□Ŷ) is formed from a reference position vector (Ŷ_{Soll}) and an actual position vector (Ŷ_{Ist}), wherein in the differential vector (ΔŶ) the regulation of the distance coordinate (Z') is eliminated, wherein a distance regulator (L_{A}) of the position regulating circuit produces a correction value (V_{ŶZ'}) in the direction of the distance coordinate (Z') and wherein the correction value (V_{ŶZ'}) is fed by means of a reverse transformation (□⁻¹) of the distance coordinate system (Ŷ') into the machine coordinate system (Ŷ) to the drives (M_{X}, M_{Y}, M_{Z}).

10. Method according to one of the claims 7 to 9,
**characterised in that** an actual distance (D_{Ist}) of the tool (T) from the workpiece (W) is determined by means of a measurement sensor (S).

11. Method according to claim 10,
**characterised in that** the actual distance (D_{Ist}) is determined by means of a capacitive measurement sensor (S).

12. Method according to one of the claims 7 to 11,
**characterised in that** the distance regulation is carried out perpendicularly to the surface of the workpiece (W).

13. Method according to one of the claims 7 to 12,
**characterised in that** the method for position regulation is provided with a position regulator according to one of the claims 1 to 6.

## Revendications

1. Régulateur de position d'un outil (T) pour l'usinage thermique d'une pièce (W), étant précisé que l'outil (T) est apte à être déplacé dans un système de coordonnées de machine (Ŷ) à l'aide d'entraînements (M_{X}, M_{Y}, M_{Z}), comprenant un circuit régulateur de position avec un régulateur de position (R_{L}) pour régler la position de l'outil (T), et un circuit régulateur d'écartement avec un régulateur d'écartement (R_{A}) pour régler un écartement (D) entre l'outil (T) et la pièce (W), étant précisé qu'une coordonnée d'écartement (Z') d'un système de coordonnées d'écartement (Ŷ') est prédéfinie par l'écartement (D),
**caractérisé en ce que** le circuit régulateur de position et le circuit régulateur d'écartement sont désaccouplés l'un de l'autre de telle sorte que le circuit régulateur d'écartement pour régler l'écartement de l'outil (T) soit prévu seulement dans le sens de la coordonnée d'écartement (Z') et que le circuit régulateur de position pour régler la position de l'outil (T) soit prévu dans les autres coordonnées (X', Y') du système de coordonnées d'écartement (Ŷ'), avec une élimination de la coordonnée d'écartement (Z').

2. Régulateur de position selon la revendication 1,
**caractérisé en ce qu'**un facteur d'amplification (KV_{D}) du régulateur d'écartement (R_{A}) est au moins approximativement aussi élevé qu'un facteur d'amplification (KV_{Y'}, KV_{Y}) du régulateur de position (R_{L}).

3. Régulateur de position selon la revendication 1 ou 2,
**caractérisé en ce que** les entraînements (M_{X}, M_{Y}, M_{Z}) sollicités par le régulateur de position présentent au moins approximativement un comportement de transmission identique.

4. Régulateur de position selon la revendication 3,
**caractérisé en ce qu'**il n'est prévu en amont et en aval du régulateur de position (R_{L}) et/ou des entraînements (M_{X}, M_{Y}, M_{Z}) aucune transformation (Θ) du système de coordonnées de machine (Ŷ) en système de coordonnées d'écartement (Ŷ') et aucune transformation d'inversion (Θ⁻¹).

5. Régulateur de position selon la revendication 1 à 4,
**caractérisé en ce qu'**il est prévu une commande prioritaire (C) en particulier sous la forme d'une commande CNC.

6. Régulateur de position selon l'une des revendications 1 à 5,
**caractérisé en ce que** l'outil (T) est un outil laser, un outil autogène, un outil à plasma ou un outil d'étincelage.

7. Procédé de réglage de position d'un outil (T) pour l'usinage thermique d'une pièce (W), étant précisé que l'outil (T) est déplacé dans un système de coordonnées de machine (Ŷ) à l'aide d'entraînements (M_{X}, M_{Y}, M_{Z}), qu'un réglage de position de l'outil (T) est réalisé à l'aide d'un circuit régulateur de position, qu'un réglage d'un écartement (D) entre l'outil (T) et la pièce (W) est réalisé en supplément à l'aide d'un circuit régulateur d'écartement, et qu'une coordonnée d'écartement (Z') d'un système de coordonnées d'écartement (Ŷ') est prédéfinie par l'écartement (D), **caractérisé en ce que** dans le circuit régulateur d'écartement, le réglage d'écartement de l'outil (T) est effectué seulement dans le sens de la coordonnée d'écartement (Z') et **en ce que** dans le circuit régulateur de position désaccouplé du circuit régulateur d'écartement, le réglage de position de l'outil (T) est réalisé dans les autres coordonnées (X', Y') du système de coordonnées d'écartement (Ŷ'), avec une élimination de la coordonnée d'écartement (Z').

8. Procédé selon la revendication 7,
**caractérisé en ce que** le réglage de position se fait dans le système de coordonnées d'écartement (Ŷ'), étant précisé qu'un régulateur de position (R_{L}) du circuit régulateur de position génère des valeurs de correction (v_{X'}, v_{Y'}) dans le système de coordonnées d'écartement (Ŷ') avec une élimination d'une valeur de correction (v_{Z}') dans le sens de la coordonnée d'écartement (Z'), qu'un régulateur d'écartement (R_{A}) du circuit régulateur d'écartement génère une valeur de correction (v_{Z'}) dans le sens de la coordonnée d'écartement (Z'), et que les valeurs de correction (v_{X'}, v_{Y'}, v_{Z'}) sont transmises aux entraînements (M_{X}, M_{Y}, M_{Z}) à l'aide d'une transformation d'inversion (Θ⁻¹) du système de coordonnées d'écartement (Ŷ') en système de coordonnées de machine (Ŷ).

9. Procédé selon la revendication 7,
**caractérisé en ce qu'**un réglage de position a lieu dans le système de coordonnées de machine (Ŷ), étant précisé qu'un vecteur différentiel (ΔŶ) est formé à partir d'un vecteur de valeur théorique de position (Ŷ_{Soll}) et d'un vecteur de valeur réelle de position (Ŷᵢₛₜ), que dans le vecteur différentiel (ΔŶ), le réglage des coordonnées d'écartement (Z') est éliminé, qu'un régulateur d'écartement (LA) du circuit régulateur de position génère une valeur de correction (v_{ŶZ'}) dans le sens de la coordonnée d'écartement (Z'), et que la valeur de correction (v_{ŶZ'}) est transmise aux entraînements (M_{X}, M_{Y}, M_{Z}) à l'aide d'une transformation d'inversion (Θ⁻¹) du système de coordonnées d'écartement (Ŷ') en système de coordonnées de machine (Ŷ).

10. Procédé selon l'une des revendications 7 à 9,
**caractérisé en ce qu'**un écartement réel (Dᵢₛₜ) entre l'outil (T) et la pièce (W) est déterminé à l'aide d'un capteur de mesure (S).

11. Procédé selon la revendication 10,
**caractérisé en ce que** l'écartement réel (Dᵢₛₜ) est déterminé à l'aide d'un capteur de mesure capacitif (S).

12. Procédé selon l'une des revendications 7 à 11,
**caractérisé en ce que** le réglage d'écartement se fait perpendiculairement à la surface de la pièce (W).

13. Procédé selon l'une des revendications 7 à 12,
**caractérisé en ce que** le procédé de réglage de position est prévu avec un régulateur de position selon l'une des revendications 1 à 6.
